# EUROPÄISCHE PATENTSCHRIFT

(11) **EP 0 903 261 B1**
(45) Veröffentlichungstag und Bekanntmachung des Hinweises auf die Patenterteilung: **28.11.2001**
(21) Anmeldenummer: 98114566.7
(22) Anmeldetag: 03.08.1998
(51) Int. Cl.: B60P 1/44

(54) **Aufhängevorrichtung für eine Hubladebühne**
Mounting device for a loading tailgate
Dispositif de suspension pour un hayon élévateur

(30) Priorität: 19.09.1997 DE 19741456
(43) Veröffentlichungstag der Anmeldung: 24.03.1999
(73) Patentinhaber: Bär, Gerd, 74078 Heilbronn (DE)
(72) Erfinder: Bär, Gerd, 74078 Heilbronn (DE)
(74) Vertreter: KOHLER SCHMID + PARTNER

(56) Entgegenhaltungen:
- EP-A- 0 266 232
- EP-A- 0 805 069
- DE-A- 4 114 705

## Beschreibung

Die Erfindung betrifft eine Aufhängevorrichtung zur Befestigung eines quer zur Längsrichtung eines Fahrzeugs verlaufenden Tragprofils für eine Hubladebühne an einem Fahrgestellrahmen im hinteren Bereich des Fahrzeugs, wobei beidseitig am Tragprofil nach hinten stehende Anschlußplatten für eine eine Plattform tragende Trageinrichtung (Tragarme) und für eine die Hub- und Senkbewegung der Plattform steuernde Hub- und Senkeinrichtung (Hubzylinder, Neigzylinder) sowie ein nach hinten stehender Unterfahrschutzträger befestigt sind, der mit der inneren Anschlußplatte in Verbindung steht, und wobei das Tragprofil über eine senkrecht ausgerichtete Aufhängeplatte am Fahrgestellrahmen gehalten ist.

Eine derartige Aufhängevorrichtung ist z.B. durch die DE 33 02 681 C2 bekanntgeworden.

Bei dieser bekannten Aufhängevorrichtung ist eine Hubladebühne am Fahrgestellrahmen mittels Laschen gehalten, an denen ein Tragrohr und ein Unterfahrschutz der Hubladebühne befestigt sind. Das Tragrohr ist mit einem nach hinten stehenden Unterfahrschutzträger des Unterfahrschutzes verbunden. Zwischen einer inneren Anschlußplatte am Tragrohr und dem Unterfahrschutzträger ist ein längs des Tragrohrs verlaufender Schraublagersteg vorgesehen, so daß zwischen diesem und dem Tragrohr eine kanalförmige Schraubentasche gebildet ist. Entsprechend ist mittels eines Schraublagerstegs am Unterfahrschutz eine Schraubentasche ausgebildet. Über jeweils drei Schraubverbindungen, die diese Schraubentaschen durch- und untergreifen und an den Laschen abgestützt sind, sind Tragrohr und Unterfahrschutz am Fahrgestellrahmen verstellbar gehalten.

Diese bekannte Aufhängevorrichtung benötigt als Aufhängestelle das äußerste Ende des Unterfahrschutzes, so daß diese Aufhängevorrichtung bei zu kurzen Fahrgestellrahmen daher nicht verwendet werden kann. Außerdem muß der Unterfahrschutz fest am Tragrohr angeschweißt sein.

Der Erfindung liegt daher die Aufgabe zugrunde, eine Aufhängevorrichtung der eingangs genannten Art zu vereinfachen und insbesondere dahingehend weiterzubilden, daß sie auch bei kurzen Fahrgestellrahmen eingesetzt werden kann.

Diese Aufgabe wird erfindungsgemäß dadurch gelöst, daß die Aufhängeplatte U-förmig ist und ihr Boden am Fahrgestellrahmen befestigt ist, daß das hintere Ende der inneren Anschlußplatte um 90° zum Unterfahrschutzträger hin zu einem parallel zur Längsrichtung des Tragprofils verlaufenden Verbindungsarm abgebogen ist, der am Unterfahrschutzträger befestigt ist, daß der Verbindungsarm am einen Außenschenkel der U-förmigen Aufhängeplatte mittels zumindest einer Schraubverbindung befestigt ist, und daß der andere Außenschenkel an der dem Verbindungsarm gegenüberliegenden Seite des Tragprofil fixiert ist.

Diese erfindungsgemäße Aufhängevorrichtung bietet den großen Vorteil, daß der Unterfahrschutz als Aufhängestelle nicht mehr erforderlich ist und daß die Aufhängeplatte auf die verschiedenen Rahmenbreiten von z.B. 750-920 mm eingestellt werden kann, indem im Verbindungsarm an gewünschter Stelle Löcher vorgesehen sind oder werden. Diese Lösung ist sehr preisgünstig, da die Aufhängeplatte mittels Laser gefertigt und dann nur noch gekantet zu werden braucht, d.h. es ist kein Schweißvorgang notwendig. Während bei der oben beschriebenen bekannten Aufhängevorrichtung zwei beabstandete Laschen für jede der beiden Schraubentaschen erforderlich sind, braucht erfindungsgemäß nur eine Aufhängeplatte vorgesehen zu werden, deren Länge in Längsrichtung des Fahrzeugs die Länge der inneren Anschlußplatte nicht oder nur unwesentlich übersteigt. Mit der erfindungsgemäßen Aufhängevorrichtung kann ein Großteil (z.B. die Hälfte) der an den Tragarmen der Hubladebühne wirkenden Kräfte über die innere Anschlußplatte direkt in die Aufhängeplatte eingeleitet werden. Dadurch wird das Tragprofil deutlich entlastet und kann mit deutlich geringerer Wandstärke ausgebildet werden. Je näher die Aufhängeplatte an der inneren Anschlußplatte angeordnet ist, desto mehr Kräfte können über diese Anschlußplatte abgeleitet werden.

Bei vorteilhaften Ausführungsformen der Erfindung können im Verbindungsarm auch eine oder mehrere Reihen von übereinander angeordneten Schraubverbindungen nebeneinander vorgesehen sein, die je nach gewünschter Fahrgestellrahmenbreite verwendet werden.

Um das häufigste Spektrum an Fahrgestellrahmenbreiten, z.B. einen Rahmenbreiten von 848-865 mm (95% der Anwendungsfälle), abzudecken, ist die mindestens eine Schraubverbindung im Verbindungsarm ganz bevorzugt in einem Langloch geführt, das sich in Längsrichtung des Tragprofils erstreckt. Wird eine Breite außerhalb diese Spektrums gewünscht, kann der Fahrzeugbauer einfach neue Löcher am Verbindungsarm an entsprechender Stelle bohren.

Bei einer bevorzugten Ausführungsform ist der Verbindungsarm, insbesondere mittels einer Abkantung, versteift, um so eine größere Stabilität gegen die Betriebskräfte zu erreichen und um die Unterfahrschutzkräfte besser über den Verbindungsarm in die Aufhängeplatte einleiten zu können.

Wenn größere Kräfte mit der Aufhängevorrichtung aufgenommen werden sollen, kann die Aufhängeplatte den Verbindungsarm, vorzugsweise mittels eines an ihrem einen Außenschenkel angeschweißten Anschlags, untergreifen.

Der andere Außenschenkel ist vorzugsweise am Tragprofil durch ein am Tragprofil angeschweißtes, nach außen hin offenes C-Profil (Halfenschiene), welches in Längsrichtung des Tragprofils verläuft und an den Außenschenkel angeschraubt ist, fixiert. So kann der Außenschenkel auf der gesamten möglichen Einstellbreite der Aufhängeplatte fixiert werden.

Um mit der erfindungsgemäßen Aufhängevorrichtung das häufigste Spektrum an Fahrgestellrahmenbreiten abdecken zu können, sind der bzw. die Verbindungsarme in Längsrichtung des Tragprofils bis zu ca. 150 mm breit. Die Breite des bzw. der Verbindungsarme wird jeweils so gewählt, daß die Aufhängeplatte im gewünschten Spektrum der Fahrgestellrahmenbreiten stets in der der inneren Anschlußplatte zugewandten Hälfte der Verbindungsarme angeordnet ist. So kann mindestens die Hälfte der an den Tragarmen bzw. den inneren Anschlußplatten wirkenden Betriebskräfte direkt über die Verbindungsarme in die Aufhängeplatte eingeleitet werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: eine Draufsicht auf die rechte Seite eines ersten Ausführungsbeispiels einer erfindungsgemäßen Aufhängevorrichtung für eine Hubladebühne an einem Fahrzeug;

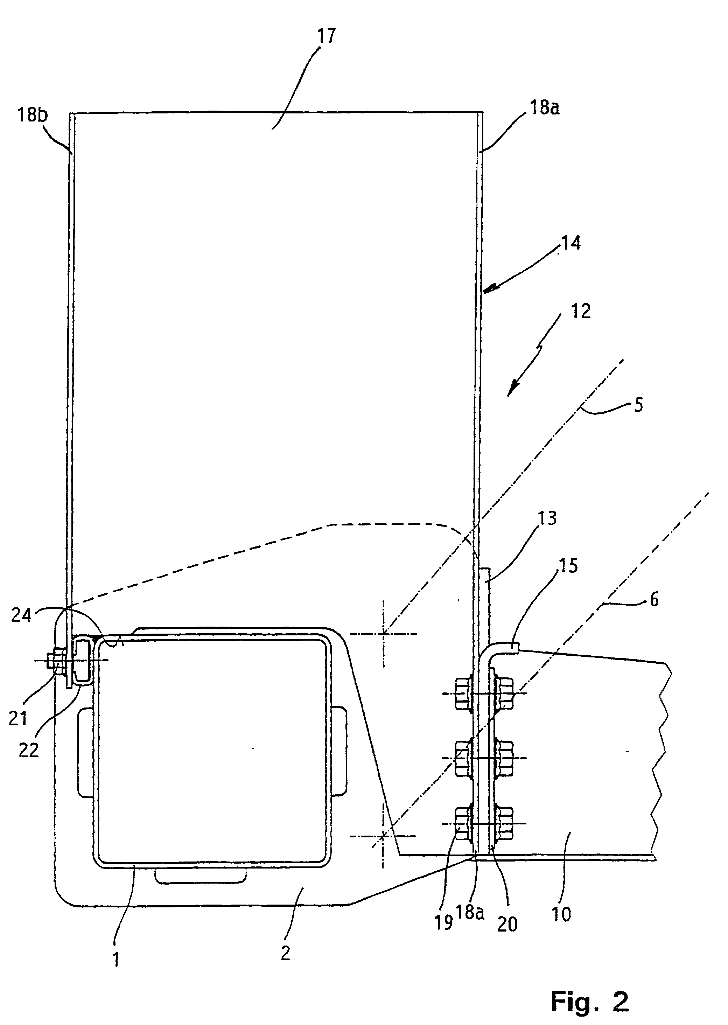

- Fig. 2: eine Seitenansicht der in Fig. 1 gezeigten Aufhängevorrichtung;
- Fig. 3: eine Rückansicht der in Fig. 1 gezeigten Aufhängevorrichtung; und
- Fig. 4: eine Seitenansicht eines zweiten Ausführungsbeispiels einer erfindungsgemäßen Aufhängevorrichtung.

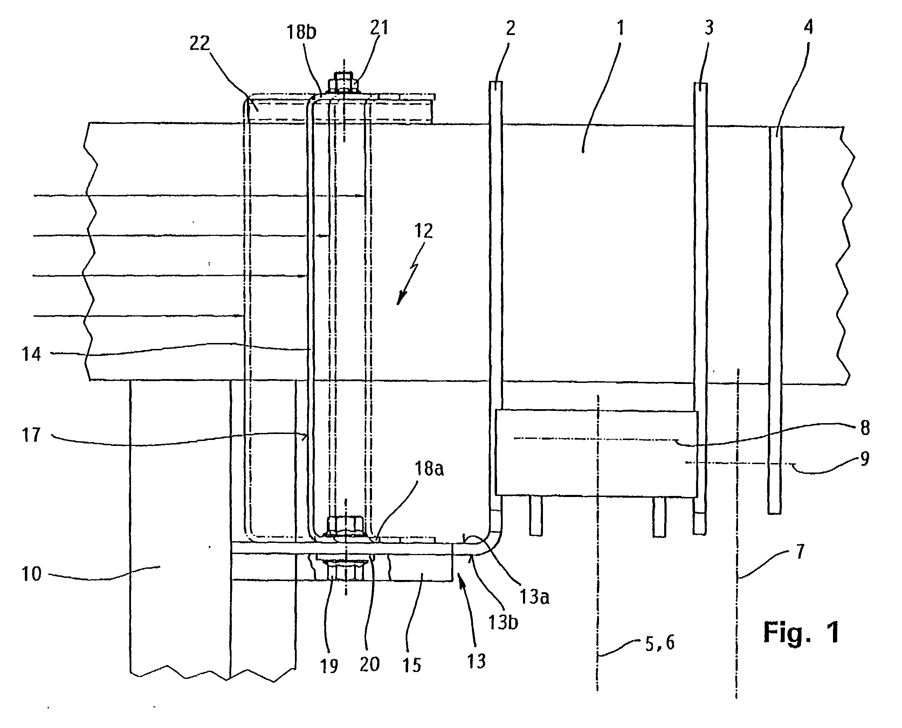

In der Zeichnung ist mit **1** ein quer zur Längsrichtung eines Fahrzeugs verlaufendes Tragprofil (Tragrohr) einer Hubladebühne gezeigt. Am Tragprofil sind beidseitig jeweils drei in Längsrichtung des Fahrzeugs nach hinten stehende Anschlußplatten **2, 3, 4** als Lagerstellen für eine Plattform tragende Tragarme **5** bzw. für die Hub- und Senkbewegung steuernde Hubzylinder **6** und Neigzylinder **7** vorgesehen, die und deren Schwenkachse **8** bzw. **9** in Fig. 1 jeweils strichpunktiert dargestellt sind. Außerdem ist weiter innen am Tragprofil 1 noch ein nach hinten erstreckender Unterfahrschutzträger **10** auf nicht dargestellte Weise befestigt.

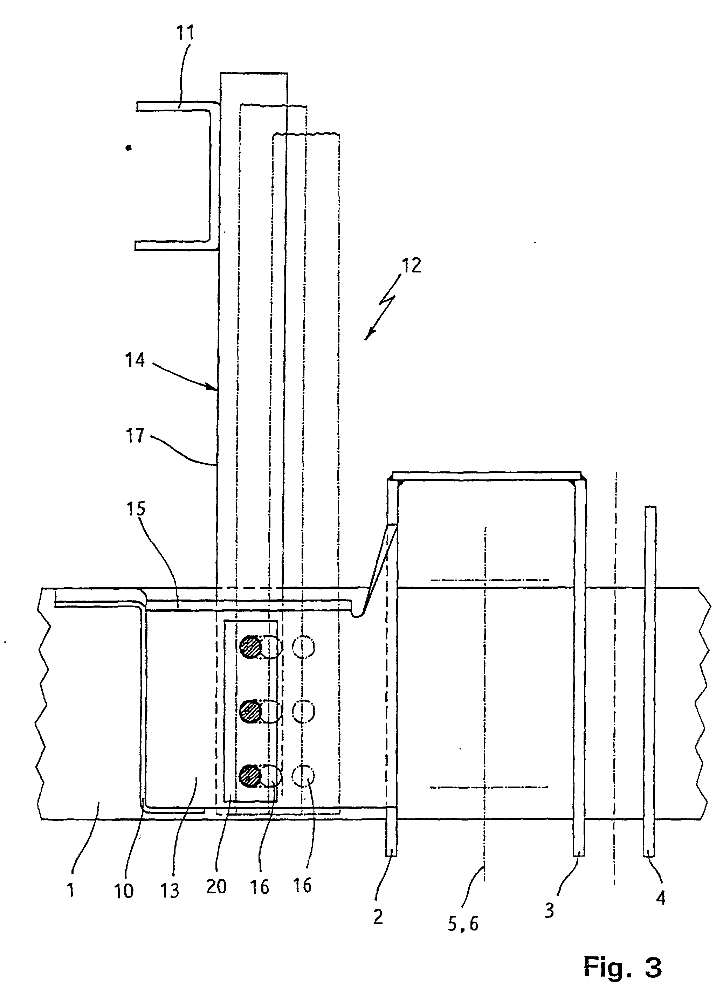

Das Tragprofil 1 der Hubladebühne ist am Fahrgestellrahmen **11** (Fig. 3) mittels einer Aufhängevorrichtung **12** befestigt, die im wesentlichen durch einen Verbindungsarm **13** an der hinteren Seite und ein Gegenlager an der vorderen Seite des Tragprofils 1 sowie durch eine den Verbindungsarm 13 am Fahrgestellrahmen 11 befestigende U-förmige Aufhängeplatte **14** gebildet ist. Der Verbindungsarm 13 ist durch das um 90° zum Unterfahrschutzträger 10 abgebogene hintere Ende der inneren Anschlußplatte 2 gebildet und am Unterfahrschutzträger 10 auf nicht dargestellte Weise befestigt. Die beiden Seitenflächen **13a** und **13b** des Verbindungsarms sind ebene senkrechte Anlageflächen, die parallel zur Längsrichtung des Tragprofils 1 verlaufen. Zur Versteifung ist der Verbindungsarm 13 oben mit einer um 90° nach hinten abgewinkelten Abkantung **15** versehen. Weiterhin sind im Verbindungsarm 13 drei untereinander angeordnete Löcher **16** (Fig. 3) vorgesehen.

Die U-förmige Aufhängeplatte 14, die - ohne Schweißvorgang - mittels Laser gefertigt und dann gekantet werden kann, liegt mit der Außenfläche ihres Bodens **17** am Fahrgestellrahmen 11 an, während ihr einer Außenschenkel **18a** am Verbindungsarm 13 und ihr anderer Außenschenkel **18b** an der dem Verbindungsarm 13 gegenüberliegenden Vorderseite des Tragprofils 1 fixiert ist. Dazu ist der an der inneren Anlagefläche 13a des Verbindungsarms 13 anliegende Außenschenkel 18a über drei die Löcher 16 durchgreifende Schraubverbindungen **19** befestigt, wobei auf der äußeren Anlagefläche 13b eine Platte **20** als Unterlegscheibe für alle drei Schraubverbindungen 19 dient, die die Zugkräfte aufnehmen. Die Druckkräfte werden von dem Tragprofil 1 in die Aufhängeplatte 14 über ihre Anlagefläche 24 eingeleitet. Die Fixierung des Außenschenkels 18b ist durch ein am Tragprofil 1 angeschweißtes, parallel zur Längsrichtung des Tragprofils 1 verlaufendes, nach außen hin offenes C-Profil **22** (Halfenschiene) gebildet, das an den Außenschenkel 18b angeschraubt (Schraubverbindung **21**) ist, so daß der Außenschenkel auf der gesamten möglichen Einstellbreite der Aufhängeplatte fixiert werden kann. Die Schraubverbindung 21 zur Aufnahme der Druckkräfte ist kleiner als die Schraubverbindung 19 ausgelegt.

Der Verbindungsarm 13 hat eine Breite von ca. 150 mm, so daß durch entsprechende Anordnung der drei untereinander angeordneten Löcher 16 in Verbindungsarm 13 die Aufhängevorrichtung 12 auf die verschiedenen Rahmenbreiten von 750-920 mm eingestellt werden kann, wie in Fig. 3 für die rechte Seite des Fahrgestellrahmnes 11 strichpunktiert angedeutet ist. Die Löcher 16 können als Langlöcher ausgestaltet sein, wie in Fig. 3 für die linke Lochreihe angedeutet ist, um z.B. die häufigsten Fahrgestellrahmenbreiten von 848-865 mm abzudecken. Auf der Rückseite ist mit dem C-Profil 22 sogar die gesamte Versatzbreite gegeben. Wird ein Maß außerhalb dem Hauptspektrum 848-865 mm gewünscht, kann der Fahrzeugbauer einfach drei neue Löcher 16 am Verbindungsarm 13 bohren, wie durch die rechte Lochreihe in Fig. 3 angedeutet ist.

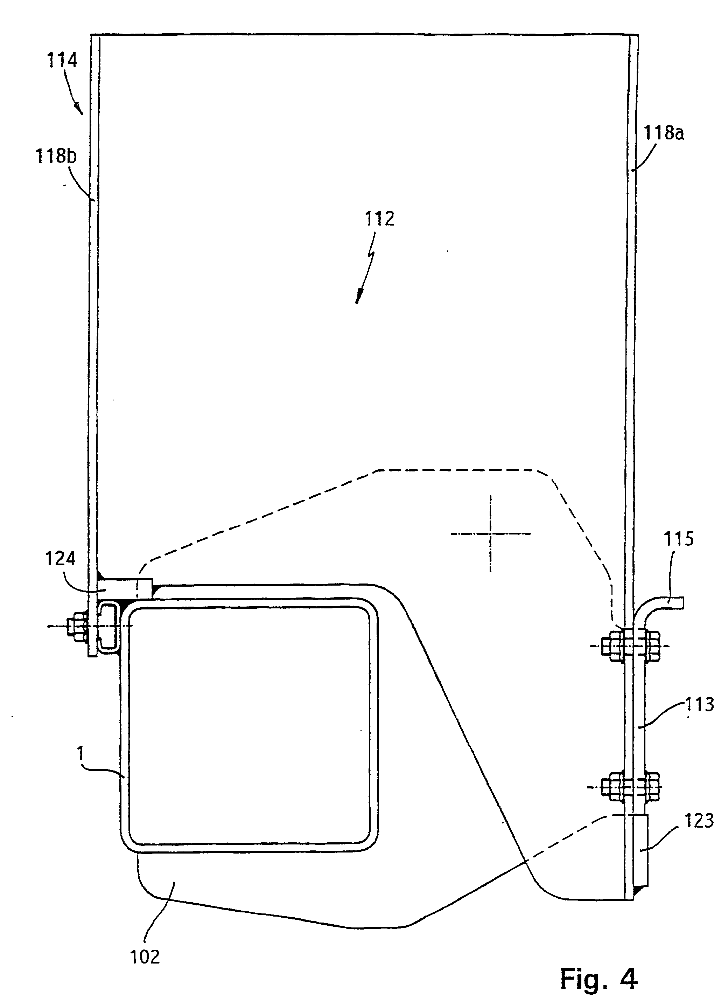

In Fig. 4 ist eine zweite Ausführungsform einer Aufhängevorrichtung **112** gezeigt, bei der dieselbe Funktion vorliegt, jedoch die Kräfte in den Verbindungsarm **113** der inneren Anschlußplatte **102** über einen Anschlag **123** eingeleitet werden, der an dem am Verbindungsarm 113 anliegenden Außenschenkel **118a** angeschweißt ist und den Verbindungsarm 113 untergreift. Auch hier ist der Verbindungsarm 113 zur Aufnahme größerer Kräfte oben mit einer Abkantung **115** versehen, um einerseits eine größere Stabilität gegen die Betriebskräfte zu erreichen und um andererseits am Unterfahrschutz angreifende Kräfte über den Verbindungsarm 113 in die Aufhängeplatte **114** einleiten zu können. Weiterhin liegt die Aufhängeplatte 114 nicht direkt, sondern über einen an ihren Außenschenkel **118b** angeschweißten Anschlag **124** auf dem Tragprofil 1 auf.

Bevorzugt ist die Aufhängeplatte 14, 114 jeweils möglichst nah an der inneren Anschlußplatte 2 angeordnet, damit ein möglichst großer Teil der an der inneren Anschlußplatte 2 wirkenden Kräfte direkt in die Aufhängeplatte 14, 114 und nicht ins Tragprofil 1 eingeleitet werden kann. Dazu können der Verbindungsarm 13, 113 entsprechend breit ausgebildet sein, damit sich die Aufhängeplatte 14, 114 stets in der äußeren Hälfte des Verbindungsarms 13, 113 befindet.

## Patentansprüche

1. Aufhängevorrichtung (12; 112) zur Befestigung eines quer zur Längsrichtung eines Fahrzeugs verlaufenden Tragprofils (1) für eine Hubladebühne an einem Fahrgestellrahmen (11) im hinteren Bereich des Fahrzeugs, wobei beidseitig am Tragprofil (1) nach hinten stehende Anschlußplatten (2, 3, 4; 102) für eine eine Plattform tragende Trageinrichtung (5) und für eine die Hub- und Senkbewegung der Plattform steuernde Hub- und Senkeinrichtung (6, 7) sowie ein nach hinten stehender Unterfahrschutzträger (10) befestigt sind, der mit der inneren Anschlußplatte (2; 102) in Verbindung steht, und wobei das Tragprofil (1) über eine senkrecht ausgerichtete Aufhängeplatte (14; 114) am Fahrgestellrahmen (11) gehalten ist,
**dadurch gekennzeichnet,**
**daß** die Aufhängeplatte (14; 114) U-förmig ist und ihr Boden (17; 117) am Fahrgestellrahmen (11) befestigt ist,
**daß** das hintere Ende der inneren Anschlußplatte (2; 102) um 90° zum Unterfahrschutzträger (10) hin zu einem parallel zur Längsrichtung des Tragprofils (1) verlaufenden Verbindungsarm (13; 113) abgebogen ist, der am Unterfahrschutzträger (10) befestigt ist,
**daß** der Verbindungsarm (13; 113) am einen Außenschenkel (18a; 118a) der U-förmigen Aufhängeplatte (14; 114) mittels zumindest einer Schraubverbindung (19) befestigt ist, und
**daß** der andere Außenschenkel (18b; 118b) an der dem Verbindungsarm (13; 113) gegenüberliegenden Seite des Tragprofil (1) fixiert ist.

2. Aufhängevorrichtung nach Anspruch 1, **dadurch gekennzeichnet, daß** im Verbindungsarm (13; 113) eine oder mehrere Reihen von übereinander angeordneten Schraubverbindungen (19) nebeneinander vorgesehen sind.

3. Aufhängevorrichtung nach Anspruch 1 oder 2, **dadurch gekennzeichnet, daß** die mindestens eine Schraubverbindung (19) im Verbindungsarm (13; 113) in einem Langloch (16) geführt ist, das sich in Längsrichtung des Tragprofils (1) erstreckt.

4. Aufhängevorrichtung nach einem der vorhergehenden Ansprüche, **dadurch gekennzeichnet, daß** der Verbindungsarm (13; 113), insbesondere mittels einer Abkantung (15; 115), versteift ist.

5. Aufhängevorrichtung nach einem der vorhergehenden Ansprüche, **dadurch gekennzeichnet, daß** die Aufhängeplatte (114) den Verbindungsarm (113), vorzugsweise mittels eines an ihrem einen Außenschenkel (118a) angeschweißten Anschlags (123), untergreift.

6. Aufhängevorrichtung nach einem der vorhergehenden Ansprüche, **dadurch gekennzeichnet, daß** der andere Außenschenkel (18b; 118b) am Tragprofil (1) durch ein am Tragprofil (1) angeschweißtes, nach außen hin offenes C-Profil (22), vorzugsweise durch eine Halfenschiene, fixiert ist, das in Längsrichtung des Tragprofils (1) verläuft und an den Außenschenkel (18b; 118b) angeschraubt ist.

7. Aufhängevorrichtung nach einem der vorhergehenden Ansprüche, **dadurch gekennzeichnet, daß** der bzw. die Verbindungsarme (13; 113) in Längsrichtung des Tragprofils (1) bis zu ca. 150 mm breit sind.

## Claims

1. A mounting device (12; 112) for mounting on a vehicle chassis (11) in the rear part of the vehicle a profiled member (1) extending crosswise to the longitudinal direction of a vehicle and intended for supporting a loading platform whereby there are, on both sides of the supporting profiled member (1) rearwardly projecting connection plates (2, 3, 4; 102) for a support means (5) which carries a platform and for a raising and lowering means (6, 7) which controls the raising and lowering movement of the platform, as well as a rearwardly projecting under-run guard carrier (10) which is connected to the inner connection plate (2; 102) and whereby the supporting profiled member (1) is supported on the vehicle chassis (11) by a vertically aligned mounting plate (14; 114), **characterised in that** the mounting plate (14; 114) is U-shaped and its bottom (17; 117) is mounted on the vehicle chassis (11), and **in that** the rear end of the inner connection plate (2; 102) is bent over through 90° in relation to the under-run guard carrier (10) into a connecting arm (13; 113) which extends parallel with the longitudinal direction of the supporting profiled member (1), the connecting arm being mounted on the under-run guard carrier (10), and **in that** the connecting arm (13; 113) is mounted on an outer arm (18a; 118a) of the U-shaped mounting plate (14; 114) by means of at least one screwed connection (19) and **in that** the other outer arm (18b; 118b) is fixed on the side of the supporting profiled member (1) which is opposite the connecting arm (13; 113).

2. A mounting device according to claim 1, **characterised in that** one or a plurality of rows of superposed screwed connections (19) are provided beside one another in the connecting arm (13; 113).

3. A mounting device according to claim 1 or 2, **characterised in that** the at least one screwed connection (19) in the connecting arm (13; 113) is guided in an elongated hole (16) which extends in a longitudinal direction of the supporting profiled member (1).

4. A mounting device according to one of the preceding claims, **characterised in that** the connecting arm (13; 113) is strengthened, particularly by means of a turned-over edge (15; 115).

5. A mounting device according to one of the preceding claims, **characterised in that** the mounting plate (114) engages under the connecting arm (113), preferably by means of an abutment (123) mounted on one of its outer arms (118a).

6. A mounting device according to one of the preceding claims, **characterised in that** the other outer arm (18b; 118b) is fixed on the supporting profiled member (1) by an outwardly open C-section (22) which is welded onto the supporting profiled member (1) and preferably by a half-rail, which extends in the longitudinal direction of the supporting profiled member (1) and bolted onto the outer arm (18b, 118b).

7. A mounting device according to one of the preceding claims, **characterised in that** the connecting arm(s) (13; 113) is (are) up to about 150 mm wide in the longitudinal direction of the supporting profiled member (1)

## Revendications

1. Dispositif de suspension (12 ; 112) pour la fixation d'un profil porteur (1), qui s'étend transversalement à la direction longitudinale d'un véhicule, pour une nacelle élévatrice sur un châssis de véhicule (11) dans la région postérieure du véhicule, dans lequel des plaques de raccordement (2, 3, 4 ; 102) en dépassement vers l'arrière sont fixées des deux côtés sur le profil porteur (1), pour un dispositif porteur (5) qui porte une plate-forme, et pour un dispositif de levage/abaissement (6, 7) qui commande le mouvement de levage et d'abaissement de la plate-forme, ainsi qu'un support protecteur anti-encastrement en dépassement vers l'arrière, celui-ci étant relié à la plaque de raccordement intérieure (2 ; 102), et dans lequel le profil porteur (1) est maintenu sur le châssis de véhicule (11) au moyen d'une plaque de suspension (14 ; 114) dirigée verticalement,
**caractérisé en ce que**
- la plaque de suspension (14 ; 114) est en forme de U et le fond de celle-ci (17; 117) est fixé sur le châssis de véhicule (11),
- l'extrémité postérieure de la plaque de raccordement intérieure (2 ; 102) est recourbée sur 90° vers le support protecteur anti-encastrement (10) vers un bras de liaison (13 ; 113) qui s'étend parallèlement à la direction longitudinale du profil porteur (1) et qui est fixé sur le support protecteur anti-encastrement (10),
- le bras de liaison (13 ; 113) est fixé sur une jambe extérieure (18a; 118a) de la plaque de suspension (14 ; 114) en forme de U à l'aide d'au moins une liaison vissée (19), et
- l'autre jambe extérieure (18b ; 118b) est fixé sur le côté du profil porteur (1) opposé au bras de liaison (13 ; 113).

2. Dispositif de suspension selon la revendication 1, **caractérisé en ce que** dans le bras de liaison (13 ; 113) sont prévues les unes à côté des autres une ou plusieurs rangées de liaisons vissées (19) agencées les unes au-dessus des autres.

3. Dispositif de suspension selon l'une ou l'autre des revendications 1 et 2, **caractérisé en ce que** ladite au moins une liaison vissée (19) est guidée dans le bras de liaison (13 ; 113) dans un trou oblong (16) qui s'étend en direction longitudinale du profil porteur.

4. Dispositif de suspension selon l'une des revendications précédentes, **caractérisé en ce que** le bras de liaison (13 ; 113) est rigidifié, en particulier au moyen d'un rabattement (15 ; 115).

5. Dispositif de suspension selon l'une des revendications précédentes, **caractérisé en ce que** la plaque de suspension (114) engage le bras de liaison (113) par le dessous, de préférence au moyen d'une butée (123) soudée sur l'une de ses jambes extérieures (118a).

6. Dispositif de suspension selon l'une des revendications précédentes, **caractérisé en ce que** l'autre jambe extérieure (18 b ; 118 b) est fixée sur le profil porteur (1), au moyen d'un profil en forme de C (22) soudé sur le profil porteur (1) et ouvert vers l'extérieur, de préférence au moyen d'un rail Halphen, qui s'étend en direction longitudinale du profil porteur (1) et qui est vissé sur la jambe extérieure (18b ; 118b).

7. Dispositif de suspension selon l'une des revendications précédentes, **caractérisé en ce que** le ou les bras de liaison (13 ; 113) a/ont une largeur allant jusqu'à environ 150 mm en direction longitudinale du profil porteur (1).
